# EUROPÄISCHE PATENTANMELDUNG

(11) **EP 1 790 929 A1**
(43) Veröffentlichungstag der Anmeldung: **30.05.2007**
(21) Anmeldenummer: 05025699.9
(22) Anmeldetag: 25.11.2005
(51) Int. Cl.: F26B 21/08, F26B 21/04

(54) **Verfahren und Vorrichtung zum Trocknen von Schüttgütern aus Feststoffen oder Mahlgut**

(71) Anmelder: Cramer, Susanne, 58566 Kierspe (DE)
(72) Erfinder: Cramer, Susanne, 58566 Kierspe (DE)
(74) Vertreter: Köchling, Conrad-Joachim

(57) **Zusammenfassung**

Um eine Vorrichtung zum Trocknen von Schüttgütern aus Feststoffen oder Mahlgut, wie Granulat, Schnipseln, Körnern oder dergleichen, bestehend aus in einem geschlossenen Trockenluftkreislauf mit in Reihe nacheinander angeordneten Bestandteilen, nämlich einem Trocknungsbehältnis (4) zur Aufnahme des zu trocknenden Gutes, einer Kühlvorrichtung (6) gegebenenfalls mit Kondensatabscheider zur Kühlung und Entfeuchtung des aus dem Trocknungsbehältnis (4) abströmenden Luftstroms, einer Trocknerpatrone (9) zur Trocknung des abgekühlten Luftstroms, einer Heizung (2) zur Aufheizung des getrockneten Luftstroms, der dem Trocknungsbehältnis (4) zugeführt wird, sowie einem in den Kreislauf eingeschalteten Gebläse (1) zum Transport der Luft durch den Kreislauf, zu schaffen, mit dem der Taupunkt der das System durchströmenden Luft definiert und geregelt werden kann, wird vorgeschlagen, dass in den Kreislauf zwischen Trocknerpatrone (9) und Trocknungsbehältnis (4) ein Taupunktfühler (3) zur Messung des Taupunktes des Luftstroms eingeschaltet ist, die Kühlvorrichtung (6) regelbar ist und/oder hinter die Trocknerpatrone (9) vor den Taupunktfühler eine ventilgesteuerte Umgebungsluftzufuhr geschaltet ist und/oder zwischen den Ausgang der Kühlvorrichtung (6) und dem Eingang in die Trocknerpatrone (9) aus der Heizung (2) abgezweigte warme Luft zuführbar ist, wobei zur Konstanthaltung des Taupunktes die Kühlvorrichtung (6) und/oder die Umgebungsluftzufuhr (10) und/oder die Warmluftzufuhr regelbar ist.

## Beschreibung

Die Erfindung betrifft eine Vorrichtung zum Trocknen von Schüttgütern aus Feststoffen oder Mahlgut, wie Granulat, Schnipseln, Körnern oder dergleichen, insbesondere von Kunststoffmaterialien, bestehend aus in einem geschlossenen Trockenluftkreislauf mit in Reihe nacheinander angeordneten Bestandteilen, nämlich einem Trocknungsbehältnis zur Aufnahme des zu trocknenden Gutes, einer Kühlvorrichtung gegebenenfalls mit Kondensatabscheider zur Kühlung und Entfeuchtung des aus dem Trocknungsbehältnis abströmenden Luftstroms, einer Trocknerpatrone zur Trocknung des abgekühlten Luftstroms, einer Heizung zur Aufheizung des getrockneten Luftstroms, der dem Trocknungsbehältnis zugeführt wird, sowie einem in den Kreislauf eingeschalteten Gebläse zum Transport der Luft durch den Kreislauf.

Des Weiteren betrifft die Erfindung ein Verfahren zum Trocknen von Schüttgütern aus Feststoffen oder Mahlgut, wie Granulat, Schnipseln, Körnern oder dergleichen, insbesondere von Kunststoffmaterialien, in einem geschlossenem Luftkreislauf mit einem Trocknungsbehältnis und einer Trocknerpatrone, wobei die Abluft des Trocknungsbehältnisses gekühlt und entfeuchtet wird, anschließend in die Trocknerpatrone eingespeist wird, anschließend die getrocknete Luft erhitzt wird und in das Trocknungsbehältnis eingespeist wird.

Derartige Vorrichtungen und Verfahren sind im Stand der Technik vielfach bekannt. Es wird hierzu beispielsweise auf die DE AS 15 44 074 verwiesen.

Weiter ist im Stand der Technik aus der DE 197 57 537 A1 eine Vorrichtung gattungsgemäßer Art bekannt, bei der zwischen Trocknungsgebläse und der Trocknerpatrone eine weitere Kühlvorrichtung eingeschaltet ist, um eine höhere Effektivität des Trocknungsvorganges und eine bessere Ausnutzung der Trockenpatrone zu gewährleisten.

Mit keiner der im Stand der Technik genannten Lösung ist es möglich, den Taupunkt des Luftstromes zu messen oder zu beeinflussen.

Ausgehend von diesem Stand der Technik liegt der Erfindung die Aufgabe zugrunde, eine Vorrichtung gattungsgemäßer Art zu schaffen, beziehungsweise ein Verfahren gattungsgemäßer Art zu schaffen, mit dem der Taupunkt der das System durchströmenden Luft definiert und geregelt werden kann.

Zur Lösung dieser Aufgabe wird vorrichtungsmäßig vorgeschlagen, dass in den Kreislauf zwischen Trocknerpatrone und Trocknungsbehältnis ein Taupunktfühler zur Messung des Taupunktes des Luftstroms eingeschaltet ist, die Kühlvorrichtung regelbar ist und/oder hinter die Trocknerpatrone vor den Taupunktfühler eine ventilgesteuerte Umgebungsluftzufuhr oder Feuchtigkeitszufuhr geschaltet ist und/oder zwischen dem Ausgang der Kühlvorrichtung und dem Eingang in die Trocknerpatrone aus der Heizung abgezweigte warme Luft zuführbar ist, wobei zur Konstanthaltung des Taupunktes die Kühlvorrichtung und/oder die Umgebungsluftzufuhr und/oder die Warmluftzufuhr regelbar ist.

Verfahrensmäßig wird zur Lösung der Aufgabe vorgeschlagen, dass zur Konstanthaltung des Taupunktes der Taupunkt im Luftstrom zwischen Trocknerpatrone und Trocknungsbehältnis mit einem Sollwert verglichen und gemessen wird und zur Konstanthaltung die Kühlleistung geregelt wird und/oder zwischen Trocknerpatrone und Taupunktfühler feuchte Umgebungsluft oder Feuchtigkeit hinzugeführt wird und/oder zwischen dem Ausgang der Kühlvorrichtung und dem Eingang in die Trocknerpatrone die Luft erwärmt beziehungsweise aus der Heizung abgezweigte warme Luft zugeführt wird, sodass der erfasste Istwert dem Sollwert angeglichen wird.

Um ein Verkleben oder Verstopfen der Molekularsiebe der Trocknerpatrone zu verhindern, kann vorrichtungsmäßig besonders bevorzugt vorgesehen sein, dass im Leitungssystem ausgangsseitig des Trocknungsbehältnisses ein Filter, insbesondere ein Staubfilter, angeordnet ist.

Hierdurch wird das Mitführen und spätere Ablagern von Kunststoffstaub oder Additiven oder dergleichen im Luftstrom verhindert, wodurch insbesondere die Einsatzzeit der Trocknerpatrone verlängert ist.

Zum gleichen Zweck wird verfahrensmäßig vorgeschlagen, dass der Luftstrom in Strömungsrichtung ausgangsseitig des Trocknungsbehältnisses gefiltert wird.

Vorrichtungsmäßig kann besonders bevorzugt vorgesehen sein, dass die Kühlvorrichtung durch einen mit fluidem Kühlmedium, insbesondere mit Wasser oder Luft betriebenen Kühler oder einen Wärmetauscher gebildet ist, wobei die Regulierung der Kühlleistung durch ein Mittel zur Regulierung der quantitativen Zufuhr des jeweiligen Kühlmediums erfolgt.

Bevorzugt ist dabei vorgesehen, dass das Mittel zur quantitativen Zufuhrregelung des Kühlmediums ein regelbares Ventil ist.

Verfahrensmäßig ist bevorzugt vorgesehen, dass die Kühlleistung durch eine Regulierung des Kühlmittelzustroms geregelt wird.

Vorrichtungsmäßig kann weiter bevorzugt vorgesehen sein, dass im Trockenluftkreislauf zwischen dem Ausgang der Kühlvorrichtung und dem Eingang der Trocknerpatrone, ein Temperaturfühler angeordnet ist, wobei aus dem gemessenen Temperaturwert Regelwerte zur Einstellung des Mittels zur Regulierung der Zufuhr des Kühlmediums abgeleitet werden.

Verfahrensmäßig kann hierzu analog vorgesehen sein, dass die Temperatur im Trockenluftkreislauf zwischen dem Ausgang der Kühlvorrichtung und dem Eingang der Trocknerpatrone, gemessen wird, wobei aus dem gemessenen Temperaturwert Regelwerte zur Einstellung des Mittels zur Regulierung der Zufuhr des Kühlmediums abgeleitet werden.

Vorrichtungsmäßig ist bevorzugt vorgesehen, dass der Taupunktfühler mit einer Steuerungs- und Regelungsanlage verbunden ist, die die erfassten IstWerte des Taupunktfühlers mit vorher in der Steuerungs- und Regelungsanlage abgelegten SollWerten vergleicht und bei Abweichungen die Kühlvorrichtung und/oder die Umgebungsluftzufuhr und/oder die Warmluftzufuhr steuert, um die Istwerte den Sollwerten anzugleichen.

Verfahrensmäßig ist schließlich besonders bevorzugt vorgesehen, dass zur Konstanthaltung des Taupunktes bei zu hohem Taupunkt im Luftstrom die Luft stärker gekühlt wird und dass bei zu niedrigen Taupunkt die Luft weniger stark gekühlt wird und/oder zur Erhöhung der Luftfeuchte Umgebungsluft und/oder vorgewärmte Luft in den Kreislauf zugeführt wird.

Mit der Erfindung wird eine Vorrichtung und ein Verfahren zur Verfügung gestellt, mittels dessen der Taupunkt der das System durchströmenden Luft sowohl kontinuierlich als auch diskontinuierlich gemessen werden kann. Bei ungüstigem oder zu hohem beziehungsweise zu niedrigem Taupunkt kann erfindungsgemäß entweder durch Regeln der Kühlvorrichtung und/oder Zufuhr von feuchter Umgebungsluft und/oder mittels aus der Heizung abgezweigter warmer Luft eine Einstellung beziehungsweise Konstanthaltung eines vorher eingestellten Taupunktes jederzeit erfolgen.

Somit kann das zu trocknende Gut in gleichem Trocknungsgrad ausgebracht werden.

Der Taupunktfühler kann erfindungsgemäß in Strömungsrichtung des Luftstroms im System zwischen der Trocknerpatrone und dem Trocknungbehältnis installiert sein. Idealerweise ist der Taupunktfühler zwischen Trocknerpatrone und Heizung installiert.

Dabei wird der Taupunkt maßgeblich durch die Lufteintrittstemperatur in die Trocknerpatrone bestimmt. Um den Taupunkt nach Luftaustritt aus der Patrone auf einen bestimmten, möglichst konstanten Wert hin zu regulieren, soll die Lufteintrittstemperatur in der Trockenpatrone definiert werden. Die Definierung dieser Lufteintrittstemperatur soll maßgeblich erfolgen durch eine Regelung der Austrittstemperatur der der Trocknerpatrone vorgeschalteten Kühlvorrichtung. Dies kann im Falle der Ausführung der Kühlvorrichtung als wasser- oder lufbetriebener Kühler oder als Wärmetauscher mittels Regulierung der quantitativen Zufuhr des jeweiligen Kühlmediums erfolgen. Die quantitative Zufuhr- Regelung des Kühlmediums erfolgt hierbei durch ein regelbares Ventil.

Die mittels Temperaturfühler gemessene Eintrittstemperatur in die Trocknerpatrone wird in Abhängigkeit von dem mittels Taupunktfühler gemessenen Taupunkt so reguliert, dass der im Kreislauf nach der Trocknerpatrone gemessene Taupunkt dementsprechend konstant bleibt.

Zur Feinabstimmung kann im Kreislauf nach der Trocknerpatrone über ein regelbares Ventil Frischluft in den Kreislauf hinzugefügt werden, um eventuell zu hohe Taupunktschwankungen auszugleichen.

Als weiteres Mittel zur Feinabstimmung kann von der Heizung abgezweigte warme Luft zwischen den Ausgang der Kühlvorrichtung und dem Eingang in die Trocknerpatrone in den Kreislauf hinzugefügt werden.

Im spezifischen Anwendungsfall kann entweder das eine oder das andere System oder aber eine Kombination der verschiednen Systeme zur Anwendung kommen. Dabei ist häufig durch Schwankungen der Temperatur des jeweils eingesetzten Kühlmediums ein stetiger Abgleich notwendig.

Alternativ oder zusätzlich zur Kühlerregelung mittels Wassermengenregulierung kann zur Regulierung der Einströmungstemperatur ins Regenerierbett über einen Bypass heiße getrocknete Luft nach der Trocknungsheizung abgezweigt werden über ein Ventil. Die abgezweigte heiße Trockenluft wird dann über eine Düse dosiert zugeführt zwischen Rückluftkühler und Trocknerpatrone. Dieses Verfahren spart Energie und führt zu längeren Standzeiten der Regenerierbetten der Trocknerpatronen, indem die getrocknete Luft zugeführt wird, und so die Regenerierbetten nicht mit zusätzlicher Feuchtigkeit beladen werden, die im späteren Regenerierungsprozess wieder ausgetrieben werden müsste.

Alternativ zur direkten Zufuhr von Feuchtigkeit von außen ist eine weitere Möglichkeit zur Regulierung des Taupunktes die gezielte Zuführung von Feuchtigkeit innerhalb des Trocknungskreislaufs über eine Bypass-Leitung. Die Abzweigung feuchter Abluft aus dem System erfolgt hierbei nach dem Trocknungsbehälter oder der Rückluftkühlung, wenn eine solche installiert ist, über ein geregeltes Ventil. Die Einspeisung der feuchten Rückluft zurück ins System erfolgt über ein Ventil, welches im Kreislauf dem Trocknungs-Gebläse und den Regenerierbetten der Trocknerpatrone nachgeordnet ist.

Der nachgeschaltete Taupunkt-Sensor indiziert hierbei die zum Erhalt eines vorab gewählten möglichst gleichmäßigen Taupunktes notwendige Feuchtigkeits- oder Luftmenge.

Dieses System eignet sich auch bei Trocknung mit extrem niedrigen Temperaturen, wenn die Installation einer Rückluftkühlung nicht notwendig ist.

Dieses System ist weniger geeignet bei Chargentrocknung, wenn die Rückluft einen so niedrigen Restfeuchtegehalt hat, dass dieser zur Regulierung des Taupunktes nicht mehr brauchbar ist.

Die Zuführung feuchter Abluft aus dem Trocknungsbehälter über eine Bypass-Leitung gewährleistet zusätzlich eine Energieeinsparung im Vergleich zur Zuführung von Feuchtigkeit aus Umgebungsluft oder einer anderen externen System, da die Abluft hier bereits erwärmt ist. Die Abzweigung von Abluft aus dem (den) Trocknungsbehälter(n) muss im Kreislauf nach dem Rückluftfilter erfolgen, um so den Kontakt der Trocknungsheizung und des Taupunktsensors mit Staubpartikeln aus dem Trockengut zu vermeiden.

Je nachdem, ob ein hitzeempfindlicher Taupunktsensor oder nicht eingebaut ist, muss die Trocknungsabluft über den Bypass über ein Ventil nach der Rückluftkühlung abgezweigt werden, um so eine Schädigung des Taupunktsensors zu verhindern.

In der Zeichnung ist ein Ausführungsbeispiel für eine Vorrichtung und der Verfahrensablauf analog der Erfindung beschrieben.

Es zeigt:

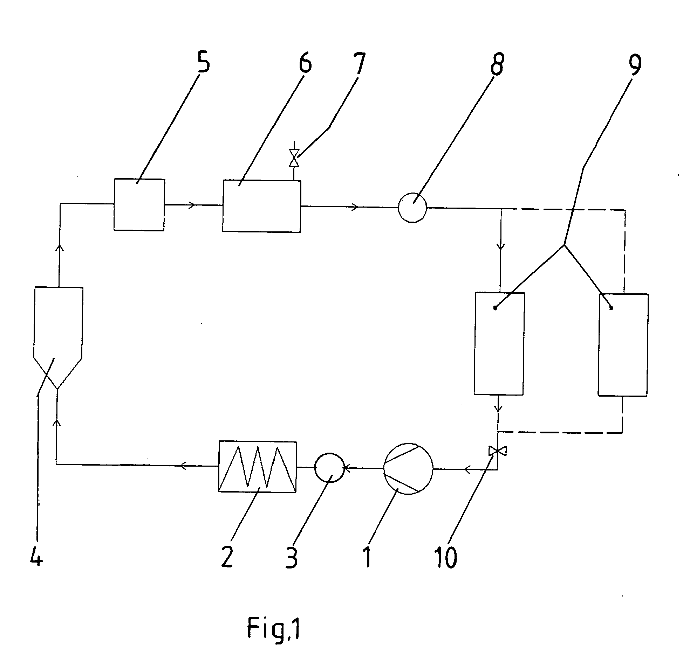

- Figur 1: eine erfindungsgemäße Vorrichtung zum Trocknen von Schüttgütern.

Die Bezugszeichen gemäß zeichnerischer Darstellung sind nachstehend erläutert.

Mit 1 ist ein Trockengebläse zur Erzeugung des Luftstromes bezeichnet. Mit 2 ist eine Heizung zur Erwärmung des Luftstromes gezeigt. Mit 3 ist ein erfindungsgemäßer Taupunktfühler zur Ermittlung des Taupunktes gezeigt. Mit 4 ist ein Trocknungsbehältnis bezeichnet, in das das zu trocknende Gut eingefüllt wird.

Mit 5 ist ein Staubfilter zum Ausfiltern von Feinstaub aus dem Luftstrom gezeigt. Dieser dient dazu, den Eintritt von Kunststoffstaub oder Additiven oder dergleichen in die nachfolgende Kühlvorrichtung beziehungsweise Trocknerpatrone zu verhindern.

Mit 6 ist eine Kühlvorrichtung gezeigt.

Mit 7 ist ein regelbares Ventil zur Regulierung der Kühlvorrichtung 6 gezeigt. Hierdurch kann die Kühlleistung mittels Regulierung der quantitativen Zufuhr des Kühlmediums reguliert werden.

Mit 8 ist ein Temperaturfühler zur Auslesung der Temperatur gezeigt. Mit 9 sind Trocknerpatronen gezeigt, von denen sich jeweils nur eine im Kreislauf befindet.

Mit 10 ist ein regulierbares Ventil gezeigt, welches eine Zufuhr von feuchter Umgebungsluft oder Feuchtigkeit aus einer anderen Quelle in den Kreislauf hinein ermöglicht.

In der Figur ist eine Vorrichtung zum Trocknen von Schüttgütern aus Feststoffen oder Mahlgut, wie Granulat, Schnipseln, Körnern oder dergleichen, insbesondere bestehend aus Kunststoff, gezeigt. Dabei besteht die Vorrichtung aus einem Trockenluftkreislauf mit in Reihe nacheinander angeordneten Bestandteilen, nämlich einem Trocknungsbehältnis 4 zur Aufnahme des zu trocknenden Gutes, einer Kühlvorrichtung 6 mit Kondensatabscheider zur Kühlung und Entfeuchtung des aus dem Trocknungsbehältnis 4 abströmenden Luftstroms, einer Trocknerpatrone 9 zur Trocknung des abgekühlten Luftstroms, einer Heizung 2 zur Aufheizung des getrockneten Luftstroms, der dem Trocknungsbehältnis 4 zugeführt wird, sowie einem in den Kreislauf eingeschalteten Gebläse 1 zum Transport der Luft durch den Kreislauf.

Erfindungsgemäß ist in den Kreislauf zwischen Trocknerpatrone 9 und Trocknungsbehältnis 4 ein Taupunktfühler 3 zur Messung des Taupunktes des Luftstromes eingeschaltet. Die Kühlvorrichtung 6 ist regelbar und hinter die Trocknerpatrone 9 ist vor den Taupunktfühler 3 eine ventilgesteuerte Umgebungsluftzufuhr 10 geschaltet. Alternativ und in der Zeichnung nicht gezeigt, ist zwischen den Ausgang der Kühlvorrichtung 6 und dem Eingang in die Trocknerpatrone 9 aus der Heizung 2 abgezweigte warme Luft zuführbar. Dabei ist zur Konstanthaltung des Taupunktes die Kühlvorrichtung 6 und die Umgebungsluftzufuhr 10 und die Warmluftzufuhr regelbar.

Mit einer derartigen erfindungsgemäßen Vorrichtung ist der Taupunkt der das System durchströmenden Luft sowohl kontinuierlich als auch diskontinuierlich messbar. Bei Abweichungen von einem gewünschten Taupunkt kann somit jederzeit durch die genannten Mittel der Taupunkt geregelt werden.

Im Ausführungsbeispiel ist im Leitungssystem ausgangseitig des Trocknungsbehältnisses 4 ein Filter 5 angeordnet. Dieser Filter 5 dient als Staubfilter zum Ausfiltern von Feinstaub aus dem Luftstrom. Hierdurch wird der Eintritt von Kunststoffstaub oder Additiven oder dergleichen in die im Luftstrom nachfolgende Kühlvorrichtung und/oder die Trockenpatrone vermieden.

Die Kühlvorrichtung 6 ist durch einen mit fluidem Kühlmedium betriebenen Wärmetauscher gebildet. Die Regulierung der Kühlleistung erfolgt durch ein Mittel zur Regulierung der quantitativen Zufuhr des jeweiligen Kühlmediums. Im Ausführungsbeispiel ist das Mittel zur quantitativen Zufuhrregelung des Kühlmediums durch ein regelbares Ventil 7 gezeigt.

Im Trockenluftkreislauf ist zwischen dem Ausgang der Kühlvorrichtung 6 und dem Eingang der Trocknerpatrone 9 ein Temperaturfühler 8 angeordnet. Dabei werden aus dem gemessenen Temperaturwert Regelwerte zur Einstellung des Mittels zur Regulierung der Zufuhr des Kühlmediums abgeleitet.

Der Taupunktfühler 3 ist mit einer Steuerungs- und Regelungsanlage verbunden, die die erfassten IstWerte des Taupunktfühlers 3 mit vorher in der Steuerungs- und Regelungsanlage abgelegten SollWerten vergleicht und bei Abweichungen die Kühlvorrichtung 6 und/oder die Umgebungsluftzufuhr 10 und/oder die Warmluftzufuhr steuert. Hierdurch werden die Ist- Werte den Soll- Werten angeglichen.

Zudem beschreibt die Erfindung ein Verfahren zum Trocknen von Schüttgütern aus Feststoffen oder Mahlgut, wie Granulat, Schnipseln, Körnern oder dergleichen, insbesondere von Kunststoffmaterialien. Das Verfahren verläuft in einem geschlossenen Luftkreislauf mit einem Trocknungsbehältnis 4 und einer Trocknerpatrone 9, wobei die Abluft des Trocknerbehältnisses 4 bei 6 gekühlt und entfeuchtet wird. Anschließend wird der Luftstrom in die Trocknerpatrone 9 eingespeist und die getrocknete Luft anschließend erhitzt und in das Trocknungsbehältnis 4 wieder eingespeist.

Erfindungsgemäß wird zur Konstanthaltung des Taupunktes der Taupunkt im Luftstrom zwischen Trocknerpatrone 9 und Trocknungsbehältnis 4 mit einem Soll- Wert verglichen und gemessen. Zur Konstanthaltung des Taupunktes wird die Kühlleistung geregelt und/oder zwischen Trocknerpatrone 9 und Taupunktfühler 3 Umgebungsluft (bei 10) hinzugeführt und/oder zwischen dem Ausgang der Kühlvorrichtung 6 und dem Eingang in die Trocknerpatrone 9 die Luft erwärmt, beziehungsweise aus der Heizung 2 abgezweigte warme Luft zugeführt. Hierdurch wird der erfasste Ist- Wert dem Soll- Wert angeglichen.

Um den Eintritt von Kunststoffstaub oder Additiven oder dergleichen in die Kühlvorrichtung 6 oder die Trocknerpatrone 9 zu verhindern, wird der Luftstrom in Strömungsrichtung ausgangsseitig des Trocknungsbehältnisses 4 gefiltert.

Im Ausführungsbeispiel wird die Kühlleistung durch eine Regulierung des Kühlmittelzustroms geregelt (bei 7). Im Trockenluftkreislauf wird zwischen dem Ausgang der Kühlvorrichtung 6 und dem Eingang der Trocknerpatrone 9 die Temperatur gemessen. Mit dem gemessenen Temperaturwert werden Regelwerte zur Einstellung des Mittels zur Regulierung der Zufuhr des Kühlmediums abgeleitet.

Zur Konstanthaltung des Taupunktes bei zu hohem Taupunkt im Luftstrom wird die Luft stärker abgekühlt. Bei zu niedrigem Taupunkt im Luftstrom wird die Luft weniger stark gekühlt und/oder zur Erhöhung der Luftfeuchte Umgebungsluft und/oder vorgewärmte Luft in den Kreislauf zugeführt.

Die Erfindung ist nicht auf das Ausführungsbeispiel beschränkt, sondern im Rahmen der Offenbarung vielfach variabel.

Alle neuen, in der Beschreibung und/oder Zeichnung offenbarten Einzel- und Kombinationsmerkmale werden als erfindungswesentlich angesehen.

## Patentansprüche

1. Vorrichtung zum Trocknen von Schüttgütern aus Feststoffen oder Mahlgut, wie Granulat, Schnipseln, Körnern oder dergleichen, insbesondere von Kunststoffmaterialien, bestehend aus in einem geschlossenen Trockenluftkreislauf mit in Reihe nacheinander angeordneten Bestandteilen, nämlich einem Trocknungsbehältnis (4) zur Aufnahme des zu trocknenden Gutes, einer Kühlvorrichtung (6) gegebenenfalls mit Kondensatabscheider zur Kühlung und Entfeuchtung des aus dem Trocknungsbehältnis (4) abströmenden Luftstroms, einer Trocknerpatrone (9) zur Trocknung des abgekühlten Luftstroms, einer Heizung (2) zur Aufheizung des getrockneten Luftstroms, der dem Trocknungsbehältnis (4) zugeführt wird, sowie einem in den Kreislauf eingeschalteten Gebläse (1) zum Transport der Luft durch den Kreislauf, **dadurch gekennzeichnet, dass** in den Kreislauf zwischen Trocknerpatrone (9) und Trocknungsbehältnis (4) ein Taupunktfühler (3) zur Messung des Taupunktes des Luftstroms eingeschaltet ist, die Kühlvorrichtung (6) regelbar ist und/oder hinter die Trocknerpatrone (9) vor den Taupunktfühler eine ventilgesteuerte Umgebungsluftzufuhr oder Feuchtigkeitszufuhr geschaltet ist und/oder zwischen den Ausgang der Kühlvorrichtung (6) und dem Eingang in die Trocknerpatrone (9) aus der Heizung (2) abgezweigte warme Luft zuführbar ist, wobei zur Konstanthaltung des Taupunktes die Kühlvorrichtung (6) und/oder die Umgebungsluftzufuhr (10) oder Feuchtigkeitszufuhr und/oder die Warmluftzufuhr regelbar ist.

2. Vorrichtung nach Anspruch 1, **dadurch gekennzeichnet, dass** im Leitungssystem ausgangsseitig des Trocknungsbehältnisses (4) ein Filter (5), insbesondere ein Staubfilter, angeordnet ist.

3. Vorrichtung nach Anspruch 1 oder Anspruch 2, **dadurch gekennzeichnet, dass** die Kühlvorrichtung (6) durch einen mit fluidem Kühlmedium, insbesondere mit Wasser oder Luft betriebenen Kühler oder einen Wärmetauscher gebildet ist, wobei die Regulierung der Kühlleistung durch ein Mittel zur Regulierung der quantitativen Zufuhr des jeweiligen Kühlmediums erfolgt.

4. Vorrichtung nach Anspruch 3, **dadurch gekennzeichnet, dass** das Mittel zur quantitativen Zufuhrregelung des Kühlmediums ein regelbares Ventil (7) ist.

5. Vorrichtung nach einem der Ansprüche 1 bis 4, **dadurch gekennzeichnet, dass** im Trockenluftkreislauf zwischen dem Ausgang der Kühlvorrichtung (6) und dem Eingang der Trocknerpatrone (9), ein Temperaturfühler (8) angeordnet ist, wobei aus dem gemessenen Temperaturwert Regelwerte zur Einstellung des Mittels zur Regulierung der Zufuhr des Kühlmediums abgeleitet werden.

6. Vorrichtung nach einem der Ansprüche 1 bis 5, **dadurch gekennzeichnet, dass** der Taupunktfühler (3) mit einer Steuerungs- und Regelungsanlage verbunden ist, die die erfassten Ist- Werte des Taupunktfühlers (3) mit vorher in der Steuerungs- und Regelungsanlage abgelegten Soll- Werten vergleicht und bei Abweichungen die Kühlvorrichtung (6) und/oder die Umgebungsluftzufuhr (10) oder Feuchtigkeitszufuhr und/oder die Warmluftzufuhr steuert, um die Istwerte den Sollwerten anzugleichen.

7. Verfahren zum Trocknen von Schüttgütern aus Feststoffen oder Mahlgut, wie Granulat, Schnipseln, Körnern oder dergleichen, insbesondere von Kunststoffmaterialien, in einem geschlossenem Luftkreislauf mit einem Trocknungsbehältnis (4) und einer Trocknerpatrone (9), wobei die Abluft des Trocknungsbehältnisses (4) gekühlt (bei 6) und entfeuchtet wird, anschließend in die Trocknerpatrone (9) eingespeist wird, anschließend die getrocknete Luft erhitzt wird und in das Trocknungsbehältnis (4) eingespeist wird, **dadurch gekennzeichnet, dass** zur Konstanthaltung des Taupunktes der Taupunkt im Luftstrom zwischen Trocknerpatrone (9) und Trocknungsbehältnis (4) mit einem Sollwert verglichen und gemessen wird und zur Konstanthaltung die Kühlleistung geregelt wird und/oder zwischen Trocknerpatrone (9) und Taupunktfühler (3) Umgebungsluft oder Feuchtigkeit (bei 10) hinzugeführt wird und / oder zwischen dem Ausgang der Kühlvorrichtung (6) und dem Eingang in die Trocknerpatrone (9) die Luft erwärmt beziehungsweise aus der Heizung (2) abgezweigte warme Luft zugeführt wird, sodass der erfasste Istwert dem Sollwert angeglichen wird.

8. Verfahren nach Anspruch 8, **dadurch gekennzeichnet, dass** der Luftstrom in Strömungsrichtung ausgangsseitig des Trocknungsbehältnisses (4) gefiltert wird.

9. Verfahren nach einem der Ansprüche 8 oder 9, **dadurch gekennzeichnet, dass** die Kühlleistung durch eine Regulierung des Kühlmittelzustroms geregelt wird (bei 7).

10. Verfahren nach einem der Ansprüche 8 bis 10, **dadurch gekennzeichnet, dass** die Temperatur im Trockenluftkreislauf zwischen dem Ausgang der Kühlvorrichtung (6) und dem Eingang der Trocknerpatrone (9), gemessen wird, wobei aus dem gemessenen Temperaturwert Regelwerte zur Einstellung des Mittels zur Regulierung der Zufuhr des Kühlmediums abgeleitet werden.

11. Verfahren nach einem der Ansprüche 8 bis 11, **dadurch gekennzeichnet, dass** zur Konstanthaltung des Taupunktes bei zu hohem Taupunkt im Luftstrom die Luft stärker gekühlt wird und dass bei zu niedrigen Taupunkt die Luft weniger stark gekühlt wird und/oder zur Erhöhung der Luftfeuchte Umgebungsluft und/oder vorgewärmte Luft in den Kreislauf zugeführt wird.
